# EUROPEAN PATENT APPLICATION

(11) **EP 2 311 674 A1**
(43) Date of publication of application: **20.04.2011**
(21) Application number: 10187902.1
(22) Date of filing: 18.10.2010
(51) Int. Cl.: B60H 1/00

(54) **Motor-compressor assembly for a refrigerating and/or conditioning system of a vehicle**

(30) Priority: 16.10.2009 IT BO20090673
(71) Applicant: Delphi Italia Automotive Systems S.r.l., Collegno (IT)
(72) Inventor: Montanari Paolo, 44011 Argenta (IT)
(74) Representative: Jorio, Paolo

(57) **Abstract**

A motor-compressor assembly (6) for a refrigerating and/or conditioning system of a vehicle, said system (1) having a refrigerating circuit (2) with a condenser (3) and an evaporator (5) for carrying out a refrigeration cycle on a refrigerant fluid. The motor-compressor assembly (6) has an electric motor (7) and a compressor (8) connectable in the refrigerating circuit (2) and actuated by the electric motor (7). The casing (15) of the electric motor (7) has a sealed chamber (16) connectable, via a fluid-intake pipe (19), to the refrigerating circuit (2) in such a way that part of the refrigerant fluid coming from the condenser (3) can circulate and evaporate in the chamber (16). The motor-compressor assembly (6) has at least one valve (20, 27) set in the fluid-intake pipe (19) and a control unit (21) for controlling the valve (20, 27) so as to enable or prevent circulation of the refrigerant fluid in the chamber (16) as a function of the measured parameters (T, P).

## Description

The present invention relates to a motor-compressor assembly for a refrigerating and/or conditioning system of a vehicle and to a method for cooling the electric motor of said motor-compressor assembly.

The present invention finds advantageous, though non-exclusive, application in refrigerating compartments of a hybrid or electric vehicle for transport of perishable goods and/or in conditioning the passenger compartment of a hybrid or electric vehicle for transport of persons, to which the ensuing description will make explicit reference without this implying any loss in generality.

As is known, in general a refrigerating and/or conditioning system for a vehicle comprises a closed refrigerating circuit, which comprises a compressor, a condenser, a first expansion valve and an evaporator, which are connected in series in the above order by means of pipes so as to be traversed by a refrigerant fluid in such a way as to carry out a refrigeration cycle on the refrigerant fluid. The compressor is actuated by an electric motor, for example an asynchronous motor, or else by the motor of the vehicle for compressing a refrigerant fluid in the gaseous state. The condenser transforms the refrigerant fluid from the gaseous state to the liquid state, i.e., it condenses the refrigerant fluid. The expansion valve causes partial evaporation of the refrigerant fluid in the liquid state, thus lowering the temperature thereof. Finally, the evaporator transforms the refrigerant fluid from the liquid state to the gaseous state, i.e., it evaporates the refrigerant fluid. The compressor takes in the gaseous refrigerant fluid to start a new refrigeration cycle. During the step of return into the gaseous state, the refrigerant fluid passes into the evaporator at a temperature much lower than in the condenser. The evaporator is provided with a fan for moving the air through the evaporator itself so as to enable cooling of the environment to be refrigerated or conditioned.

In addition, refrigeration systems are known in which the electric motor that drives the compressor is cooled exploiting the refrigerant fluid. For example, the U.S. patent published under No. US 3,945,219 describes a refrigerating system in which part of the refrigerant fluid leaving the evaporator is introduced into the sealed machine body of the electric motor. Said system is far from efficient from the standpoint of energy consumption in so far as the amount of refrigerant fluid used for cooling the electric motor is not optimized, and a fair share of the cooling capacity of the system is lost to cool the electric motor, even when the latter works in conditions such as not to risk overheating.

This disadvantage is even more evident when such a refrigerating system is used in an electric or hybrid vehicle. By "hybrid vehicle" is commonly understood a vehicle comprising an internal-combustion engine and an electric motor operating in synergy for reducing fuel consumption of the internal-combustion engine. In fact, hybrid or electric vehicles start off as vehicles with low environmental impact, in which it is fundamental to optimize the energy consumption of the various systems and devices mounted on board.

The aim of the present invention is to provide a motor-compressor assembly for a refrigerating and/or conditioning system of a vehicle, said motor-compressor assembly being free from the drawbacks described above and, at the same time, being easy and inexpensive to produce.

According to the present invention, a motor-compressor assembly for a refrigerating and/or conditioning system of a vehicle, a refrigerating and/or conditioning system for a vehicle, and a method for cooling an electric motor of a motor-compressor assembly for a refrigerating and/or conditioning system of a vehicle are provided according to what is defined in the annexed claims.

The present invention will now be described with reference to the annexed drawings, which illustrate a non-limiting example of embodiment thereof and in which:
- Figure 1 illustrates a refrigerating and/or conditioning system for a vehicle, said system comprising the motor-compressor assembly provided according to the teachings of the invention; and
- Figure 2 illustrates, in greater detail, the electric motor of the motor-compressor assembly of Figure 1.

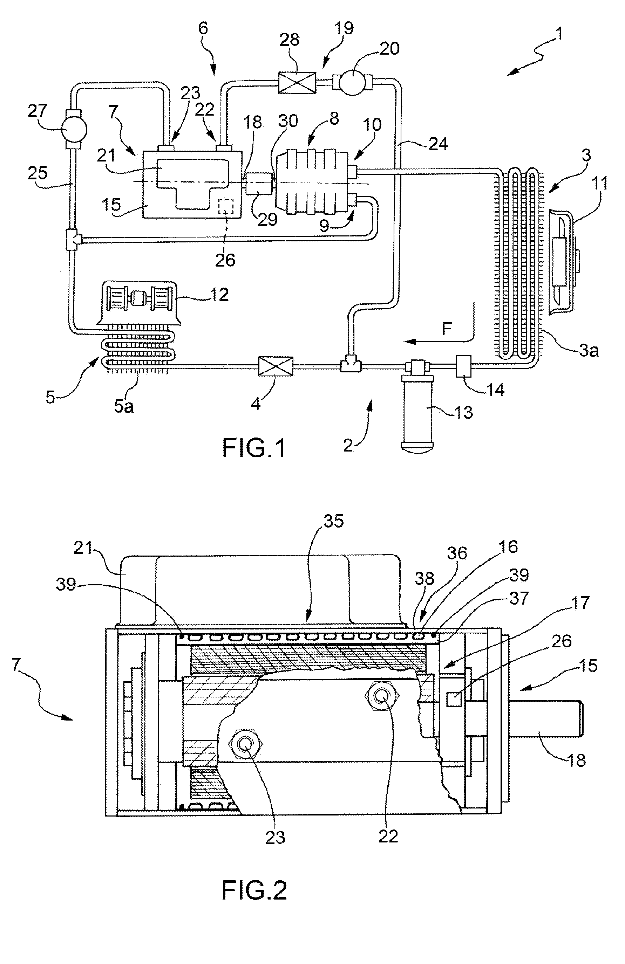

In Figure 1, designated as a whole by 1 is a refrigerating and/or conditioning system for a vehicle (not illustrated). The system 1 comprises a refrigerating circuit 2, which comprises a condenser 3, a first expansion valve 4 and an evaporator 5 connected in series by means of pipes so as to be traversed in said order by a refrigerant fluid, and a motor-compressor assembly 6, which comprises an electric motor 7 and a compressor 8 actuated by the electric motor 7. The compressor 8 is designed to be connected between the evaporator 5 and the condenser 3 so as to close the refrigerating circuit 2 to be able to carry out a refrigeration cycle on the refrigerant fluid, said cycle being in itself known and hence not being described in further detail. In particular, the compressor 8 has an inlet 9, designed to be connected to the outlet of the evaporator 5 to take in the refrigerant fluid, and an outlet 10, designed to be connected to the inlet of the condenser 3 to supply the compressed refrigerant fluid. The refrigerant fluid circulates in the refrigerating circuit 2 in a direction of circulation indicated by F in Figure 1. The compressor 8 is constituted, for example, by a rotary compressor, or else by a piston compressor, or else by a scroll compressor.

The condenser 3 and the evaporator 5 each comprise a respective radiator 3a, 5a for heat exchange with the air. The radiator 5a of the evaporator 5 is designed to be set in the environment of the vehicle to be cooled or conditioned. The system 1 comprises an electric fan 11, coupled with the radiator 3a to favour transfer, towards the outside of the vehicle, of the heat produced by the condenser 3, and an electric fan 12, coupled with the radiator 5a to enable cooling of the environment to be refrigerated or conditioned.

Once again with reference to Figure 1, the system 1 comprises a dehumidifier filter 13, set in the refrigerating circuit 2 at a point between the condenser 3 and the expansion valve 4 to remove humidity from the refrigerant fluid in the liquid state coming from the condenser 3. The system 1 comprises a maximum pressostat 14 set in the refrigerating circuit 2 at a point between the condenser 3 and the expansion valve 4 for monitoring the pressure of the refrigerant fluid in the liquid state. Advantageously, the maximum pressostat 14 is set in the refrigerating circuit 2 at a point between the condenser 3 and the dehumidifier filter 13, as illustrated in Figure 1. According to an embodiment not illustrated of the invention, the dehumidifier filter 13 has an additional inlet to which the maximum pressostat 14 can be connected.

According to the invention, with particular reference to Figure 2, the electric motor 7 comprises a casing 15, which has a sealed chamber 16, and a stator-rotor assembly 17, which is external to the chamber 16. In particular, the casing 15 comprises a housing 35 for the stator-rotor assembly 17, the housing 35 comprising a cylindrical side wall 36 that envelops laterally the stator-rotor assembly 17 for at least part of its own length, measured along the shaft 18 of the electric motor 7. The chamber 16 is made within the side wall 36 and has the shape of a coil wound in a cylindrical helix. In Figure 2, designated by 16 is precisely one of the turns of the coil that forms the sealed chamber. The stator-rotor assembly 17 is set in the housing 35 so that it shares the axis of winding of the coil which forms the chamber 16 and so as to be surrounded laterally by the coil for at least part of the length of the stator-rotor assembly 17. Advantageously, the side wall 36 envelops the stator-rotor assembly 17 throughout its own length in such a way that the stator-rotor assembly 17 is surrounded, throughout its own length, by the coil that forms the chamber 16.

The side wall 36 comprises a metal inner cylinder 37, which has, on its own outer surface, a groove wound in a spiral, and a metal outer cylinder 38, which is fitted and blocked with interference around the inner cylinder 37 so as to close the groove at the top and thus form the chamber 16. Two seal rings 39 are fitted on the two end portions of the inner cylinder 37 in a position corresponding to respective small circular grooves made on the outer surface in such a way that the chamber 16 formed between the two cylinders 37 and 38 is sealed. The grooves on the outer surface of the inner cylinder 37 are obtained by machining, for example by means of turning. Each turn of the chamber 16 has a cross section of a substantially rectangular shape.

According to the invention, with reference again to Figure 1, the motor-compressor assembly 6 comprises a fluid-intake pipe 19, designed to connect the chamber 16 to the refrigerating circuit 2 in such a way that a part of the refrigerant fluid coming from the condenser 3 can circulate and evaporate in the chamber 16 and return to the compressor 8, an on/off valve 20, constituted, for example, by a solenoid valve and set in the fluid-intake pipe 19 in such a way as to enable or prevent circulation of said part of the refrigerant fluid in the chamber 16, and an electronic control unit 21 for controlling the on/off valve 20 as a function of at least one parameter. In other words, a part of the refrigerant fluid coming from the condenser 3 is deviated into the chamber 16 in order for it to be able to evaporate, and hence reduce its own temperature, in the chamber 16 so as to cool the electric motor 7 by absorbing the heat produced by the stator-rotor assembly 17. In addition, the circulation of the refrigerant fluid in the chamber 16 is enabled or prevented as a function of a parameter that indicates the effective need to cool the electric motor 7 in order to prevent overheating of the electric motor 7 and, at the same time, optimize the absorption of frigories for said purpose.

The chamber 16 comprises an inlet 22 and an outlet 23 for the refrigerant fluid. The inlet 22 and the outlet 23 are made on the outside of the side wall 36 of the housing 35 of the electric motor 7. In particular, the inlet 22 and the outlet 23 are constituted by respective threaded fluid-tight holes made in the outer cylinder 38 of the side wall 36. The fluid-intake pipe 19 comprises a branch 24, which is designed to connect the inlet 22 of the chamber 16 to the refrigerating circuit 2 at a point between the condenser 3 and the evaporator 5, and a branch 25, which is designed to connect the outlet 23 of the chamber 16 to the refrigerating circuit 2 at a point between the evaporator 5 and the inlet 9 of the compressor 8. Advantageously, the on/off valve 20 is set in the branch 24 so as to enable or prevent entry of the refrigerant fluid into the chamber 16, and hence to prevent circulation of the refrigerant fluid in the chamber 16.

The motor-compressor assembly 6 comprises a temperature sensor 26 set inside the casing 15 of the electric motor 7 for measuring the temperature T of the electric motor 7. The control unit 21 is configured for controlling the on/off valve 20 as a function of the measured temperature T. In particular, the control unit 21 is configured for comparing the measured temperature T with a pair of temperature thresholds defining a hysteresis and comprising a first threshold T1 and a second threshold T2, which is lower than the first threshold T1, and for controlling the on/off valve 20 on the basis of said comparison. If the measured temperature T exceeds the threshold T1, then the control unit 21 governs opening of the on/off valve 20 for enabling circulation of the refrigerant fluid in the chamber 16. When the measured temperature T becomes lower than the threshold T2, then the control unit 21 governs closing of the on/off valve 20 to prevent circulation of the refrigerant fluid in the chamber 16.

According to an embodiment of the invention, the control unit 21 is configured for acquiring a measured pressure P obtained via the maximum pressostat 14 and for controlling the on/off valve 20 as a function of the measured pressure P. The control unit 21 is configured for comparing the measured pressure P with a pair of pressure thresholds P1 and P2 defining a hysteresis and for controlling the on/off valve 20 on the basis of said comparison, in a way similar to what has been described above as regards control as a function of the measured temperature T.

According to a further embodiment of the invention, the control unit 21 is configured for controlling the on/off valve 20 as a function of the measured temperature T and of the measured pressure P.

According to a further embodiment of the invention, the control unit 21 is configured for controlling the on/off valve 20 so as to alternately enable and prevent circulation of said part of the refrigerant fluid in the chamber 16 according to a periodic cycle defined by a pre-set duty cycle D.

Advantageously, the motor-compressor assembly 6 comprises a further on/off valve 27 constituted, for example, by a solenoid valve set in the branch 25. The control unit 21 is configured for controlling the on/off valve 27 in a way similar and synchronous with the on/off valve 20, i.e., for controlling simultaneous opening or closing of the two on/off valves 20 and 27. In this way, it is possible to prevent circulation of the refrigerant fluid in most of the fluid-intake pipe 19 when cooling of the electric motor 7 is not necessary.

Advantageously, the branch 24 of the fluid-intake pipe 19 is designed to connect the inlet 22 of the chamber 16 to the refrigerating circuit 2 at a point between the condenser 3 and the expansion valve 4. In addition, the motor-compressor assembly 6 comprises a further expansion valve 28, set in the branch 24 at a point downstream of the on/off valve 20 for expanding, and hence, cooling, the part of the refrigerant fluid directed to the chamber 16 downstream of the point of intake from the refrigerating circuit 2. In this way, the refrigerant fluid expands, thus cooling, only in the proximity of the chamber 16 and in the chamber 16, reducing the dispersions of refrigeration capacity along the fluid-intake pipe 19.

The motor-compressor assembly 6 further comprises an elastic joint 29 for coaxial connection of the shaft 18 of the electric motor 7 with the rotating shaft 30 of the compressor 8. The advantages of the elastic joint 29 as compared to a traditional kinematic coupling via pulleys and transmission belt consist in the fact that it is lighter, requires fewer maintenance operations, reduces any friction, and, consequently, increases the efficiency of the motor-compressor assembly 6. In addition, the elastic joint 29 functions as flexible coupling and compensates for any possible minor misalignments between the shafts 18 and 30.

The electric motor 7 is a d.c. brushless motor. In particular, the electric motor 7 can be a permanent-magnet motor, or else a so-called "torque motor". The choice depends upon the applications for which the motor-compressor assembly 6 is used. In addition, the electric motor 7 is of the type that can be supplied with a voltage of nominal amplitude chosen, for example, in a range between 80 and 700 V. A voltage with said values of amplitude is the one typically supplied by the d.c. batteries mounted on board electric or hybrid vehicles.

The aforementioned types of electric motor 7 can be easily controlled, in terms of torque supplied and/or r.p.m., via an electronic power control circuit, which is of a known type and hence is not illustrated or described in further detail. For this purpose, the control unit 21 comprises inside it an electronic power control circuit, which is provided with a heat dissipator (not illustrated).

Advantageously, the control unit 21 is mounted on the casing 15, on the outside thereof, as illustrated in Figure 1, and in such a way that the power control circuit, and in particular its heat dissipator, is thermally coupled to the chamber 16. In this way, the circulation of the refrigerant fluid in the chamber 16 enables improvement in cooling by the power control circuit.

According to an embodiment (not illustrated) of the invention, the ensemble constituted by the expansion valve 28 and by the on/off valve 20 is replaced by a single electronic expansion valve of a known type, which comprises an inlet portion functioning as an on/off valve and an outlet portion that carries out expansion.

According to a simplified embodiment (not illustrated) of the invention, the branch 24 of the fluid-intake pipe 19 is designed to connect the inlet 22 of the chamber 16 to the refrigerating circuit 2 at a point between the expansion valve 4 and the evaporator 5, and the expansion valve 28 is absent. In addition, in accordance with two subvariants of the invention, the motor-compressor assembly 6 comprises just one of the on/off valves 20 and 27, i.e., just the on/off valve 20 on the branch 24, or else just the on/off valve 27 on the branch 25.

According to a further aspect of the invention, a method is provided for cooling an electric motor of a motor-compressor for a refrigerating and/or conditioning system of a vehicle. Said method is implemented by the motor-compressor assembly 6 described above and illustrated in Figures 1 and 2. In particular, said method basically envisages equipping the casing 15 of the electric motor 7 with a sealed chamber 16 such that the stator-rotor assembly 17 of the electric motor 7 is external to the chamber 16, deflecting part of the refrigerant fluid coming from the condenser 3 in such a way that it can circulate and evaporate in the chamber 16 and return to the compressor 8, and enabling or preventing circulation of said part of the refrigerant fluid as a function of at least one parameter.

The steps of said method are clear from what has been described previously as regards the motor-compressor assembly, and are hence not described in further detail.

The main advantages of the motor-compressor assembly 6 described above, as compared to the motor-compressor assemblies known in the field of mobile refrigeration, are a greater efficiency and a higher reliability of operation. This is made possible thanks to the cooling of the electric motor 7, obtained by causing circulation, in a sealed chamber 16 made in the side wall 36 of the housing 35 of the electric motor 7, of a part of the refrigerant fluid coming from the condenser 3 and by controlling circulation of the refrigerant fluid in the chamber 16 as a function of measured parameters so as to minimize the amount of frigories consumed for cooling the electric motor 7 and hence optimize the overall electrical energy consumption of the motor-compressor assembly 6. The particular coil conformation of the sealed chamber 16 enables a more efficient evaporation of the refrigerant fluid along the housing 35 of the electric motor 7, and hence a more efficient and optimal cooling of the electric motor 7. In addition, the particular structure and assembly of the housing 35 optimizes the overall dimensions of the electric motor 7 and provides a system for cooling the electric motor 7 that is extremely sturdy and reliable.

Consequently, the motor-compressor assembly 6 described above is particularly advantageous for a refrigerating and/or conditioning system of an electric or hybrid vehicle, for which it is of fundamental importance to reduce the consumption of electrical energy of all the electrical and electronic devices mounted on board to a minimum.

## Claims

1. A motor-compressor assembly for a refrigerating and/or conditioning system of a vehicle; the system (1) comprising a refrigerating circuit (2), which comprises a condenser (3), a first expansion valve (4) and an evaporator (5) connected so as to be traversed in said order by a refrigerant fluid; the motor-compressor assembly (6) comprising an electric motor (7) and a compressor (8), which is actuated by the electric motor and is designed to be connected between the outlet of the evaporator (5) and the inlet of the condenser (3) so as to close said refrigerating circuit (2); the motor-compressor assembly (6) being **characterized in that** the electric motor (7) comprises a casing (15), which has a sealed chamber (16), and a stator-rotor assembly (17), which is external to the chamber (16), and **in that** it comprises a fluid-intake pipe (19) designed to connect the chamber (16) to said refrigerating circuit (2) in such a way that a part of the refrigerant fluid coming from the condenser (3) can circulate and evaporate in the chamber (16) and return to the compressor (8), at least one on/off valve (20, 27) set in said fluid-intake pipe (19) in such a way as to enable or prevent the circulation of said part of the refrigerant fluid in the chamber (16), and an electronic control unit (21) for controlling said at least one on/off valve (20, 27).

2. The motor-compressor assembly according to Claim 1, wherein said chamber (16) comprises an inlet (22) and an outlet (23) for the refrigerant fluid; said fluid-intake pipe (19) comprising a first branch (24) and a second branch (25), which are designed to connect, respectively, the inlet (22) and the outlet (23) of the chamber (16) to said refrigerating circuit (2), respectively at a point between said condenser (3) and said evaporator (5) and at a point between said evaporator (5) and said compressor (8); said at least one on/off valve comprising a first on/off valve (20) set in the first branch (24).

3. The motor-compressor assembly according to Claim 2, wherein said at least one on/off valve comprises a second on/off valve (27) set in said second branch (25); said electronic control unit (21) being configured for controlling the second on/off valve (27) in a way similar and synchronous to the first on/off valve (20).

4. The motor-compressor assembly according to Claim 2 or 3, wherein said first branch (24) is designed to connect said inlet (22) of said chamber (16) to said refrigerating circuit (2) at a point between said condenser (3) and said first expansion valve (4); the motor-compressor assembly (6) comprising a second expansion valve (28) set in the first branch (24) at a point downstream of said first on/off valve (20).

5. The motor-compressor assembly according to any one of Claim 1 to 4, and comprising a temperature sensor (26) set within said casing (15) of the electric motor (7) for measuring the temperature (T) of the electric motor (7); said electronic control unit (21) being configured for controlling said at least one on/off valve (20, 27) as a function of the measured temperature (T) of the electric motor (7).

6. The motor-compressor assembly according to any one of Claims 1 to 5, wherein said system (1) comprises a maximum pressostat (14) set in said refrigerating circuit (2) at a point between said condenser (3) and said first expansion valve (4) for measuring the pressure (P) of the refrigerant fluid; said electronic control unit (21) being configured for controlling said at least one on/off valve (20, 27) as a function of the measured pressure (P) of the refrigerant fluid.

7. The motor-compressor assembly according to any one of Claims 1 to 6, wherein said casing (15) comprises a housing (35) for said stator-rotor assembly (17), said housing (35) comprising a cylindrical side wall (36) that envelops laterally the stator-rotor assembly (17) for at least part of its own length; said chamber (16) being provided inside said side wall (36) and having the shape of a coil wound in a cylindrical helix in such a way that said stator-rotor assembly (17) is enveloped, for at least part of its own length, by said chamber (6).

8. The motor-compressor assembly according to any one of Claims 1 to 7, wherein said electronic control unit (21) comprises a power control circuit for controlling the torque supplied by said electric motor (7) and is mounted on said casing (15) of the electric motor (7) and in such a way that the power control circuit is thermally coupled to said chamber (16).

9. A method for cooling an electric motor of a motor-compressor assembly for a refrigerating and/or conditioning system of a vehicle; the system (1) comprising a refrigerating circuit (2), which comprises a condenser (3), a first expansion valve (4) and an evaporator (5,) connected to be traversed in said order by a refrigerant fluid; the motor-compressor assembly (6) comprising an electric motor (7) and a compressor (8), which is actuated by the electric motor (7) and is designed to be connected between the outlet of the evaporator (5) and the inlet of the condenser (3) so as to close said refrigerating circuit (2); the method comprising:
- equipping the casing (15) of the electric motor (7) with a sealed chamber (16) such that the stator-rotor assembly (17) of the electric motor (7) is external to the chamber (16);
- deflecting part of the refrigerant fluid coming from the condenser (3) in such a way that it can circulate and evaporate in the chamber (16) and return to the compressor (8); and
- enabling or preventing circulation of said part of the refrigerant fluid as a function of at least one parameter (P, T, D).

10. The method according to Claim 9, wherein said part of the refrigerant fluid is deflected by said refrigerating circuit (2) at a point between said condenser (3) and said first expansion valve (4); the method comprising:
- expanding said part of the refrigerant liquid after it has been deflected by the refrigerating circuit (2), by means of a second expansion valve (28).

11. The method according to Claim 9 or 10, wherein said at least one parameter (P, T, D) comprises a temperature (T) of the electric motor (7) measured within said casing (15).

12. The method according to any one of Claims 9 to 11, wherein said at least one parameter (P, T, D) comprises a pressure (P) of the refrigerant fluid measured in said refrigerating circuit (2) at a point between said condenser (3) and said first expansion valve (4).

13. The method according to any one of Claims 9 to 12, wherein enabling or preventing circulation of the refrigerant fluid in the chamber (16) as a function of at least one parameter (P, T, D) comprises:
- measuring at least one thermodynamic parameter (T, P) relating to a part of the motor-compressor assembly (6) or of the system (1) via metering means (26, 14);
- comparing each measured thermodynamic parameter (T, P) with a respective pair of thresholds (T1, T2, P1, P2) comprising a first threshold (T1, P1) and a second threshold (T2, P2), which is lower than the first threshold (T1, P1);
- preventing circulation of said part of the refrigerant fluid in the chamber (16) if the thermodynamic parameter (T, P) is higher than the first threshold (T1, P1); and
- enabling circulation of said part of the refrigerant fluid in the chamber (16) if the thermodynamic parameter (T, P) is lower than the second threshold (T2, P2).

14. The method according to Claim 9 or Claim 10, wherein enabling or preventing circulation of said part of the refrigerant fluid in the chamber (16) as a function of at least one parameter (P, T, D) comprises:
- alternately enabling and preventing circulation of said part of the refrigerant fluid in the chamber (16) according to a periodic cycle defined by a pre-set duty cycle (D).

15. A refrigerating and/or conditioning system for a vehicle, the system (1) comprising a refrigerating circuit (2), which comprises a condenser (3), a first expansion valve (4) and an evaporator (5) connected so as to be traversed in said order by a refrigerant fluid, and a motor-compressor assembly (6), which comprises an electric motor (7) and a compressor (8) actuated by the electric motor (7) and connected between the outlet of the evaporator (5) and the inlet of the condenser (3) so as to close said refrigerating circuit (2); the motor-compressor assembly (6) being **characterized in that** it is of the type claimed in any one of Claims 1 to 8.
